# FASCICULE DE BREVET EUROPEEN

(11) **EP 3 637 645 B1**
(45) Date de publication et mention de la délivrance du brevet: **09.06.2021**
(21) Numéro de dépôt: 18199454.2
(22) Date de dépôt: 09.10.2018
(51) Int. Cl.: H04L 1/00, H04L 29/06, H04L 12/40, H04L 1/08

(54) **DISPOSITIF ÉLECTRONIQUE ET PROCÉDÉ DE RÉCEPTION DE DONNÉES VIA UN RÉSEAU DE COMMUNICATION REDONDÉ, SYSTÈME DE COMMUNICATION ET PROGRAMME D'ORDINATEUR ASSOCIÉS**
ELEKTRONISCHE VORRICHTUNG UND VERFAHREN ZUM DATENEMPFANG ÜBER EIN REDUNDANTES KOMMUNIKATIONSNETZ, ENTSPRECHENDES KOMMUNIKATIONSSYSTEM UND COMPUTERPROGRAMM
ELECTRONIC DEVICE AND METHOD FOR RECEIVING DATA VIA A REDUNDANT COMMUNICATION NETWORK, ASSOCIATED COMMUNICATION SYSTEM AND COMPUTER PROGRAM

(43) Date de publication de la demande: 15.04.2020
(73) Titulaire: Thales, 92400 Courbevoie (FR)
(72) Inventeur: MONNIER, Stéphane, Jean-Mary c/o THALES AVIONICS, 33700 MÉRIGNAC (FR)
(74) Mandataire: Lavoix

(56) Documents cités:
- WO-A1-2006/053459
- US-A1- 2010 091 784
- US-A1- 2011 162 081
- US-A1- 2017 324 515

## Description

La présente invention concerne un dispositif électronique de réception de données via un réseau de communication redondé comportant au moins deux réseaux élémentaires indépendants, le dispositif électronique étant configuré pour être connecté à chaque réseau élémentaire.

L'invention concerne également un système électronique de communication de données comprenant un dispositif électronique d'émission et un tel dispositif électronique de réception, reliés entre eux par un réseau de communication redondé, le réseau de communication comportant au moins deux réseaux élémentaires indépendants.

L'invention concerne également un procédé de réception de données via un réseau de communication redondé comportant au moins deux réseaux élémentaires indépendants, le procédé étant mis en oeuvre par un tel dispositif électronique de réception connecté à chaque réseau élémentaire.

L'invention concerne également un programme d'ordinateur comportant des instructions logicielles qui, lorsqu'elles sont exécutées par un ordinateur, mettent en œuvre un tel procédé.

L'invention concerne le domaine des systèmes de communication avec réseau de communication redondé, en particulier des systèmes de communication avioniques embarqués à bord d'aéronef, tels que des systèmes de communication avioniques conformes à la partie 7 de la norme ARINC 664.

Les documents US 2010/091784 A1, US 2011/162081 A1, WO 2016/053459 A1 et US 2017/324515 A1 décrivent chacun des dispositifs électroniques de réception de données.

On connait du document FR 2 864 393 B1 un réseau de communication redondant de type Ethernet full-duplex commuté, et un procédé de gestion de la redondance d'un tel réseau, notamment dans le domaine avionique.

Le réseau de communication comporte au moins deux réseaux élémentaires indépendants comprenant chacun au moins un équipement source et au moins un équipement destinataire reliés entre eux par au moins un lien physique au travers d'au moins un commutateur. Chaque équipement est relié à chaque réseau élémentaire, et chaque trame émise par un équipement source sur un lien virtuel d'un réseau élémentaire indépendant comporte un numéro compris dans un intervalle prédéterminé.

En réception par un équipement destinataire d'une trame sur un lien virtuel à un instant donné, le procédé de gestion de la redondance comprend la définition, pour ce lien virtuel, d'une fenêtre comprise dans ledit intervalle prédéterminé, correspondant à des trames déjà reçues à cet instant donné ; la comparaison du numéro de la trame reçue avec ladite fenêtre ; et la prise en compte de la trame reçue lorsque le numéro de trame n'est pas compris dans ladite fenêtre.

Cependant, un tel réseau de communication redondant et un tel procédé de gestion de la redondance ne sont pas très robustes en termes de cybersécurité et sont notamment sensibles à une éventuelle cyberattaque qui compromettrait l'un des réseaux élémentaires.

Le but de l'invention est alors de proposer un dispositif électronique et un procédé de réception de données via un réseau de communication redondé comportant au moins deux réseaux élémentaires indépendants, qui permettent de détecter plus efficacement une cyberattaque.

A cet effet, l'invention a pour objet un dispositif électronique de réception de données, selon la revendication 1.

Le dispositif électronique de réception selon l'invention permet alors de vérifier que les trames reçues sur les différents réseaux élémentaires indépendants sont cohérentes entre elles et détecter ainsi une éventuelle cyberattaque qui compromettrait l'un des réseaux élémentaires.

Le dispositif électronique de réception selon l'invention permet également de détecter une trame de données supplémentaire qui serait émise sur un seul des réseaux élémentaires.

Le dispositif électronique de réception selon l'invention évite en outre d'avoir à stocker toutes les trames reçues via les différents réseaux élémentaires, la vérification de cohérence entre les trames reçues étant effectuée à partir du code de contrôle de trame, tel qu'un code CRC ou un code FCS.

Suivant d'autres aspects avantageux de l'invention, le dispositif électronique de réception est selon l'une quelconque des revendications 2 à 7.

L'invention a également pour objet un système électronique de communication de données, selon la revendication 8.

L'invention a également pour objet un procédé de réception de données, selon la revendication 9.

L'invention a également pour objet un programme d'ordinateur selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un aéronef équipé d'un système de communication selon l'invention, comprenant au moins deux équipements avioniques reliés entre eux par un réseau de communication redondé ; et
- la figure 2 est un organigramme d'un procédé de transmission de données au sein du système de communication de la figure 1.

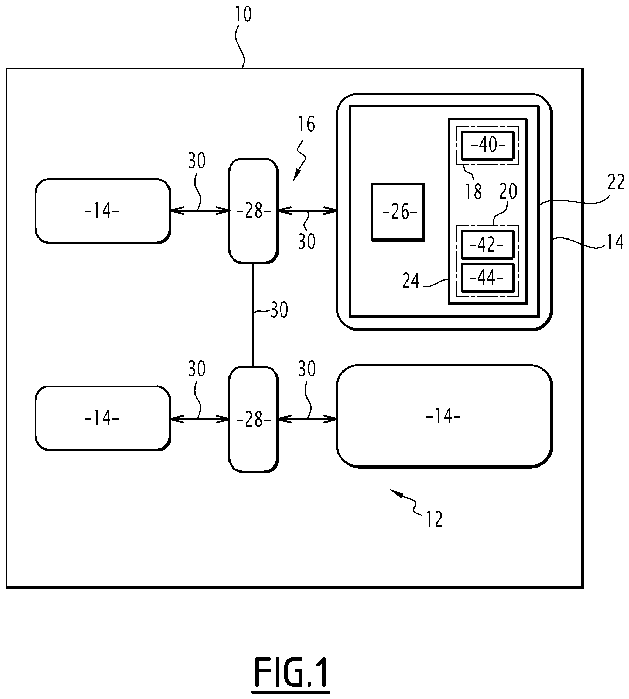

Sur la figure 1, un aéronef 10 comprend un système de communication 12 comportant au moins deux équipements électroniques 14 reliés entre eux par un réseau de communication redondé 16, tel qu'un réseau de communication Ethernet redondé.

L'aéronef 10 est de préférence un avion. En variante, l'aéronef 10 est un hélicoptère, ou encore un drone piloté à distance par un pilote.

Le système de communication 12 comporte plusieurs équipements électroniques 14, tels que des équipements avioniques comme dans l'exemple de la figure 1 où le système de communication 12 est embarqué à bord de l'aéronef 10.

Le système de communication 12 comprend un dispositif électronique d'émission 18 et un dispositif électronique de réception 20 reliés entre eux par le réseau de communication redondé 16.

Dans l'exemple de la figure 1, chaque équipement électronique 14 est de préférence configuré, d'une part, pour émettre des données à destination d'autre(s) équipement(s) électronique(s) 14, et d'autre part, pour recevoir des données de la part d'autre(s) équipement(s) électronique(s) 14. Chaque équipement électronique 14 comprend alors de préférence le dispositif d'émission 18 et le dispositif de réception 20.

L'homme du métier comprendra bien entendu qu'un équipement électronique 14 qui ne serait destiné qu'à émettre des données et pas à en recevoir, comportera alors le dispositif d'émission 18, mais pas le dispositif de réception. Inversement, un équipement électronique 14 qui ne serait destiné qu'à recevoir des données de la part d'autre(s) équipement(s) électronique(s) 14 comportera alors le dispositif de réception 20, mais pas le dispositif d'émission.

Chaque équipement électronique 14 est de préférence conforme à la partie 7 de la norme ARINC 664.

Dans l'exemple de la figure 1, chaque équipement électronique 14 comprend une unité de traitement d'informations 22 formée par exemple d'une mémoire 24 associée à un processeur 26.

Dans l'exemple de la figure 1, un seul équipement électronique 14 est représenté en détail avec les différents dispositifs et modules qu'il contient, par souci de simplification du dessin.

Le réseau de communication 16 comprend au moins un commutateur réseau 28 et au moins une liaison bidirectionnelle 30, chaque commutateur réseau 28 étant connecté à un ou plusieurs équipements électroniques 14 via des liaisons bidirectionnelles 30 respectives. Le réseau de communication 16 comprend de préférence plusieurs commutateurs réseau 28, comme dans l'exemple de la figure 1 où le réseau de communication 16 comprend deux commutateurs réseau 28 reliés entre eux par une liaison bidirectionnelle 30.

L'homme du métier comprendra que, lorsque le réseau de communication 16 est un réseau de communication Ethernet, par exemple de type Ethernet "full-duplex" (bidirectionnel simultané) commuté, chaque commutateur réseau 28 est un commutateur réseau Ethernet, par exemple de type Ethernet "full-duplex" commuté, et chaque liaison bidirectionnelle 30 est une liaison bidirectionnelle Ethernet, par exemple de type Ethernet "full-duplex" commuté.

Le réseau de communication 16 est de préférence conforme à la partie 7 de la norme ARINC 664, et chaque commutateur réseau 28 est alors également conforme à la partie 7 de la norme ARINC 664. Le réseau de communication 16 est, par exemple, un réseau AFDX (de l'anglais *Avionics Full DupleX switched ethernet*) avec un ou plusieurs commutateur(s) réseau(x) 28 conforme(s) à la partie 7 de la norme ARINC 664.

Le réseau de communication 16 de type Ethernet "full-duplex" commuté, tel que défini par exemple dans le document US 2003/0152077 A1, est basé sur le standard Ethernet full-duplex commuté décrit par la norme IEEE802.3, et offre des fonctionnalités améliorées par rapport à ce standard pour permettre une meilleure fiabilité dans la transmission des informations, notamment dans le domaine avionique.

Le réseau de communication 16 offre un temps de transmission déterministe de par l'ajout de services de communication sur le réseau Ethernet. Cet aspect déterministe utilise un concept de lien virtuel, qui est une représentation conceptuelle d'une liaison d'un équipement 14 source vers au moins un équipement 14 destinataire. Un tel concept de lien virtuel permet d'isoler les transferts de données entre un équipement 14 source et des équipements 14 destinataires. Un lien virtuel est vu comme un "tuyau" sur le réseau 16.

Comme décrit dans le document FR 2 864 393 B1, un lien virtuel est caractérisé par exemple par:
- un sens de transfert, le lien virtuel étant monodirectionnel,
- un équipement 14 source unique,
- un ou plusieurs équipements 14 destinataires,
- une bande passante (nombre maximum de paquets et leur taille par seconde) figée,
- un temps maximum garanti de transfert des paquets d'un équipement 14 source vers un équipement 14 destinataire, quel que soit le comportement du reste du réseau 16, chaque lien virtuel ayant son propre temps de transfert,
- un chemin figé sur le réseau 16, et
- un identifiant unique.

Le commutateur 28 connaît, par une table de configuration statique, les liens virtuels qu'il doit commuter ainsi que le nombre de paquets autorisés pour un lien virtuel.

Ce concept de lien virtuel permet de figer les communications entre les équipements 14 en configurant les routes et les bandes passantes allouées aux liens virtuels. Ainsi, le flux formé par un lien virtuel est assuré de ne pas être perturbé par les autres flux partageant les mêmes liens physiques tout au long de sa route dans le réseau. De plus, ce concept de lien virtuel permet, par une gestion centralisée des flux, de s'assurer que la somme des bandes passantes allouées aux liens virtuels sur un même lien physique ne dépasse pas les capacités de la technologie de celui-ci.

Le réseau de communication 16 est un réseau de communication redondant et comporte au moins deux réseaux élémentaires indépendants, redondants l'un de l'autre. Dans ce cas, deux équipements électroniques 14, un équipement source et un équipement destinataire, communiquent par l'intermédiaire d'au moins deux réseaux élémentaires indépendants. De façon connue, la redondance est réalisée trame par trame sur chacun desdits réseaux.

A titre d'exemple, sur un lien virtuel, l'équipement source envoie successivement des trames d'informations vers l'équipement destinataire. Chacune desdites trames est envoyée, avec un champ de données identique, sur chacun des réseaux. En fonction de la charge et de la configuration desdits réseaux élémentaires, ces deux trames peuvent arriver à l'équipement destinataire à des instants différents. On se place ici dans le cas où les deux réseaux élémentaires fonctionnent correctement et par conséquent les deux trames émises arrivent à l'équipement 14 destinataire.

Une trame de données, ou encore un paquet de données, est définie comme un ensemble de données envoyé en une seule fois sur le réseau de communication 16. Les données de chaque trame ne sont pas interprétées. Le réseau de communication 16 les transporte sans connaître leur signification.

Chaque trame comporte un identifiant de trame et un champ de données. L'identifiant de trame est inclus dans des données réseaux qui sont utilisées pour acheminer la trame à bon port. Le champ de données correspond aux données utiles, qui sont la "charge utile" de la trame.

Chaque trame comporte généralement une partie de données utiles et une partie d'en-tête et de fin de trame. L'identifiant de trame est alors inclus dans la partie d'en-tête et de fin de trame, et le champ de données correspond à la partie de données utiles.

Dans l'exemple de la partie 7 de la norme ARINC 664, l'identifiant de trame est formé d'un identifiant du lien virtuel correspondant, également noté VL_ID (de l'anglais *Virtual Link IDentifier*), et d'un numéro de séquence, également noté SN (de l'anglais *Sequence Number*). L'identifiant du lien virtuel correspondant, ou VL_ID, est inclus un champ d'adresse du destinataire (de l'anglais *Destination Address*), lui-même inclus dans la partie d'en-tête et de fin de trame. Le numéro de séquence est un compteur pour un lien virtuel donné, et s'incrémente à chaque émission d'une trame ayant le même identifiant de lien virtuel (VL_ID), ce qui permet de distinguer deux trames associées à un même lien virtuel. Le numéro de séquence, ou SN, est aussi inclus dans la partie d'entête et de fin de trame.

Lorsque le réseau de communication 16 est de type Ethernet "full-duplex" commuté, la redondance du réseau 16 est par exemple mise en oeuvre selon le procédé décrit dans le document US 2003/0147377 A1.

Chaque dispositif électronique d'émission 18 est configuré pour émettre, à destination du ou des dispositifs électroniques de réception 20, au moins une trame de données sur chacun des réseaux élémentaires. Chaque dispositif d'émission 18 est configuré pour être connecté à chaque réseau élémentaire.

Dans l'exemple de la figure 1, chaque dispositif d'émission 18 comprend alors un module d'émission 40 configuré pour émettre, à destination du ou des dispositifs électroniques de réception 20, au moins une trame de données sur chacun des réseaux élémentaires.

Chaque dispositif d'émission 18 est, par exemple, un dispositif avionique conforme à la partie 7 de la norme ARINC 664, et le module d'émission 40 est alors configuré pour émettre chaque trame selon un protocole conforme à la partie 7 de la norme ARINC 664.

Chaque dispositif électronique de réception 20 est configuré pour recevoir des données, en particulier des trames de données, via le réseau de communication redondé 16. Chaque dispositif de réception 20 est configuré pour être connecté à chaque réseau élémentaire.

Chaque dispositif de réception 20 comprend un module de réception 42 configuré pour recevoir via le réseau de communication 16 au moins une trame de données, chaque trame étant transmise sur chacun des réseaux élémentaires.

Selon l'invention, chaque dispositif de réception 20 comprend un module de vérification 44 configuré, pour au moins un identifiant de trame reçu, pour calculer un code de contrôle de trame pour chacun des réseaux élémentaires, puis pour comparer les codes de contrôle de trame entre les réseaux élémentaires, chaque code de contrôle de trame dépendant du champ de données de la trame reçue via le réseau élémentaire respectif.

Chaque dispositif de réception 20 est, par exemple, un dispositif avionique conforme à la partie 7 de la norme ARINC 664, et le module de réception 42 est alors configuré pour recevoir chaque trame selon un protocole conforme à la partie 7 de la norme ARINC 664.

Chaque commutateur réseau 28 (de l'anglais *switch*) est connu en soi, et comporte différents ports de communication, également appelés ports de connexion, chaque port de communication étant apte à être connecté à un équipement électronique 14 correspondant.

Dans l'exemple de la figure 1, le module d'émission 40, le module de réception 42 et le module de vérification 44 sont réalisés chacun sous forme d'un logiciel exécutable par le processeur 26. La mémoire 24 est alors apte à stocker un logiciel d'émission configuré pour émettre au moins une trame de données sur chacun des réseaux élémentaires à destination d'autre(s) dispositif(s) de réception 20. La mémoire 24 est également apte à stocker un logiciel de réception configuré pour recevoir via le réseau de communication 16 au moins une trame de données, chaque trame étant transmise sur chacun des réseaux élémentaires, et un logiciel de vérification configuré, pour au moins un identifiant de trame reçu, pour calculer un code de contrôle de trame pour chacun des réseaux élémentaires, puis pour comparer les codes de contrôle de trame entre les réseaux élémentaires, chaque code de contrôle de trame dépendant du champ de données de la trame reçue via le réseau élémentaire respectif. Le processeur 26 de l'unité de traitement d'informations 22 est alors apte à exécuter le logiciel d'émission dans le cas du dispositif d'émission 18, ou bien à exécuter le logiciel de réception et le logiciel de vérification dans le cas du dispositif de réception 20.

En variante non représentée, le module d'émission 40, le module de réception 42 et le module de vérification 44 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit).*

Le module de vérification 44 est, pour chaque identifiant de trame reçu, configuré pour calculer le code de contrôle de trame pour chacun des réseaux élémentaires, puis pour comparer les codes de contrôle de trame entre les réseaux élémentaires.

Lorsque le réseau de communication 16 redondé comporte seulement deux réseaux élémentaires, le module de vérification 44 est, pour l'identifiant de trame respectif, configuré pour comparer le code de contrôle de trame calculé pour un réseau élémentaire avec le code de contrôle de trame calculé pour l'autre réseau élémentaire et pour générer une alerte en cas d'incohérence entre les deux codes de contrôle de trame calculés.

En variante, lorsque le réseau de communication 16 redondé comporte au moins trois réseaux élémentaires, le module de vérification 44 est, pour l'identifiant de trame respectif, configuré pour comparer les codes de contrôle de trame entre les réseaux élémentaires via un algorithme de vote majoritaire et pour générer une alerte en cas d'incohérence entre les codes de contrôle de trame calculés.

Selon cette variante, l'algorithme de vote majoritaire comporte par exemple un test de l'existence d'une valeur majoritaire parmi l'ensemble des valeurs des codes de contrôle de trame calculés pour l'ensemble des réseaux élémentaires, la valeur majoritaire étant la valeur la plus fréquente parmi lesdites valeurs de codes calculés, si cette valeur existe.

En complément facultatif, le module de vérification 44 est en outre, pour au moins un identifiant de trame reçu, configuré pour déterminer une date de réception de la trame associée audit identifiant pour chacun des réseaux élémentaires, pour comparer les dates de réception entre les réseaux élémentaires et vérifier que l'écart entre deux dates de réception est inférieur ou égal à un écart maximal prédéfini.

L'écart maximal prédéfini correspond par exemple au biais maximal (de l'anglais *skew max*) défini dans la partie 7 de la norme ARINC 664.

Selon ce complément facultatif, le module de vérification 44 est, de préférence pour chaque identifiant de trame reçu, configuré pour déterminer la date de réception de la trame associée audit identifiant pour chacun des réseaux élémentaires, pour comparer les dates de réception entre les réseaux élémentaires et vérifier que l'écart entre deux dates de réception est à chaque fois inférieur ou égal à l'écart maximal prédéfini.

Le code de contrôle de trame est par exemple un code FCS (de l'anglais *Frame Check Sequence*), tel qu'un code de contrôle de redondance cyclique, également appelé code CRC (de l'anglais *Cyclic Redundancy Check*).

Dans l'exemple de la partie 7 de la norme ARINC 664, le code de contrôle de trame est calculé à partir de tous les champs de la trame qui sont compris entre le champ d'adresse du destinataire (de l'anglais *Destination Address*) et le numéro de séquence (SN) inclus.

L'homme du métier observera que, pour une trame donnée, le code de contrôle de trame n'est pas nécessairement identique d'un réseau élémentaire à l'autre. En particulier, dans l'exemple de la partie 7 de la norme ARINC 664, le code de contrôle de trame diffère, pour une même trame, d'un réseau élémentaire à l'autre, le champ dénommé MAC Source, inclus dans la partie d'en-tête et de fin de trame, étant en effet pour une même trame, distinct d'un réseau élémentaire à l'autre.

L'homme du métier notera toutefois que lorsque le code de contrôle de trame est, pour une même trame, distinct d'un réseau élémentaire à l'autre, alors le module de vérification 44 est par exemple configuré pour, à partir de la trame reçue sur un premier réseau élémentaire, estimer le code de contrôle de trame attendu pour le ou chacun des autres réseaux élémentaires sur lesquels la trame est destinée à être reçue. Le module de vérification 44 est ensuite configuré pour calculer le code de contrôle de trame pour chaque autre réseau élémentaire sur lequel ladite trame est reçue, puis détecter une éventuelle incohérence entre les deux codes de contrôle de trame calculés pour les différents réseaux élémentaires, en cas de différence entre le code de contrôle de trame estimé, à partir de la trame reçue sur le premier réseau élémentaire, et le code de contrôle de trame calculé, pour la trame reçue sur l'autre réseau élémentaire.

En complément facultatif encore, lorsque l'identifiant de trame évolue de manière prédéfinie pour des trames émises successivement sur un même réseau élémentaire, le module de vérification 44 est configuré en outre pour vérifier, pour au moins une nouvelle trame reçue, que l'identifiant de trame de la nouvelle trame reçue est cohérent avec l'identifiant de trame de la précédente trame reçue, compte tenu de l'écart temporel entre la date de réception de la précédente trame et la date de réception de la nouvelle trame.

Le module de vérification 44 est de préférence configuré pour effectuer, pour chaque nouvelle trame reçue, cette vérification de cohérence de l'identifiant de trame de la nouvelle trame reçue vis-à-vis de l'identifiant de trame de la précédente trame reçue.

A titre d'exemple, lorsque les dispositifs d'émission 18 et de réception 20 sont des dispositifs avioniques conformes à la partie 7 de la norme ARINC 664, l'évolution de l'identifiant de trame consiste, pour un réseau élémentaire donné, c'est-à-dire pour un VL_ID donné, en une évolution prédéfinie du numéro de séquence SN pour des trames émises successivement au cours du temps sur le réseau élémentaire concerné. Le module de vérification 44 est alors configuré pour vérifier que le numéro de séquence SN de chaque nouvelle trame reçue sur ce réseau élémentaire est cohérent avec le numéro de séquence SN de la précédente trame reçue. Alternativement ou complémentairement, le module de vérification 44 est configuré pour vérifier, à partir du numéro de séquence SN d'une trame reçue sur le réseau élémentaire, que le ou les numéros de séquence SN de la ou des prochaines trames reçues au cours d'une période temporelle prédéfinie, telle que le biais maximal (de l'anglais *skew max*), sont cohérents avec ledit numéro de séquence SN de la trame courante reçue.

En cas d'incohérence d'identifiant de trame, en particulier de numéro de séquence SN selon l'exemple de la partie 7 de la norme ARINC 664, le module de vérification 44 est configuré pour ignorer chaque nouvelle trame reçue pour laquelle une telle incohérence a été détectée.

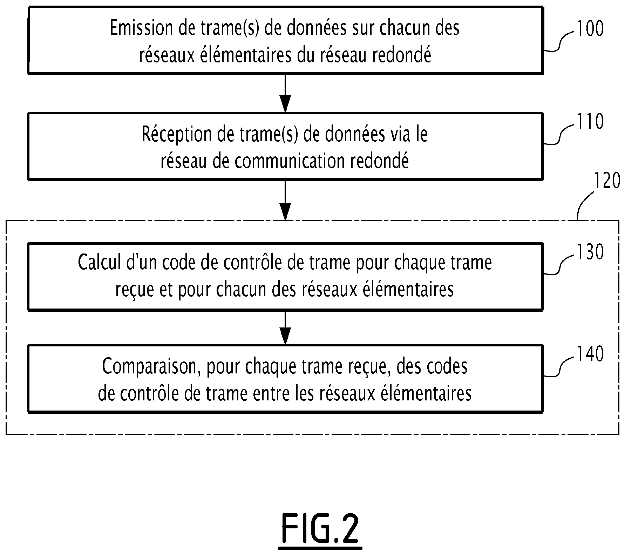

Le fonctionnement du système de communication 12 selon l'invention va désormais être expliqué à l'aide de la figure 2 représentant un organigramme d'un procédé de transmission de données au sein du système de communication 12 depuis un dispositif d'émission 18 à destination de dispositif(s) de réception 20 via le réseau de communication redondé 16.

Lors d'une étape initiale 100, le dispositif d'émission 18 émet, via son module d'émission 40 et à destination de dispositif(s) de réception 20, une ou plusieurs trames de données sur chacun des réseaux élémentaires du réseau de communication redondé 16. Chaque trame émise comportant un identifiant de trame et un champ de données.

Lors de l'étape 110, chaque dispositif de réception 20 destinataire reçoit, sur chacun des réseaux élémentaires du réseau de communication redondé 16 et via son module de réception 42, la ou les trames de données émises.

Chaque dispositif de réception 20 destinataire ayant reçu au moins une trame de donnée vérifie alors, lors de l'étape suivante 120 et via son module de vérification 44, que la ou les trames reçues sur les différents réseaux élémentaires du réseau de communication redondé 16 sont cohérentes d'un réseau élémentaire à l'autre.

L'étape de vérification 120 comporte alors une sous-étape 130 lors de laquelle le module de vérification 44 calcule, pour au moins un identifiant de trame reçu, le code de contrôle de trame pour chacun des réseaux élémentaires, chaque code de contrôle de trame dépendant du champ de données de la trame reçue via le réseau élémentaire respectif.

L'étape de vérification 120 comporte ensuite une sous-étape 140 lors de laquelle le module de vérification 44 compare les codes de contrôle de trame entre les réseaux élémentaires pour ledit au moins un identifiant de trame reçu. Une alerte est générée par le module de vérification 44 en cas d'incohérence détectée entre les codes de contrôle de trame lors de cette comparaison.

Lorsque le réseau de communication redondé 16 comporte seulement deux réseaux élémentaires, la comparaison est effectuée entre le code de contrôle de trame calculé pour un réseau élémentaire et le code de contrôle de trame calculé pour l'autre réseau élémentaire, une alerte est générée en cas d'incohérence entre les deux codes de contrôle de trame calculés.

En variante, lorsque le réseau de communication 16 redondé comporte au moins trois réseaux élémentaires, la comparaison est effectuée via l'algorithme de vote majoritaire entre les au moins trois codes de contrôle de trame calculés pour chaque identifiant de trame reçu, une alerte est générée en cas d'incohérence entre les codes de contrôle de trame calculés via l'algorithme de vote majoritaire.

En complément facultatif, la cohérence des identifiants de trame reçus sur le ou les autres réseaux élémentaires est vérifiée en regard de l'écart maximal prédéfini, tel que le biais maximal (*skew max*) défini dans la partie 7 de la norme ARINC 664. A cet effet, le module de vérification 44 détermine alors en outre, pour au moins un identifiant de trame reçu, et de préférence pour chaque identifiant de trame reçu, la date de réception de la trame associée audit identifiant pour chacun des réseaux élémentaires, et compare ensuite les dates de réception entre les réseaux élémentaires. Il vérifie alors que l'écart entre deux dates de réception est à chaque fois inférieur ou égal à l'écart maximal prédéfini.

En complément facultatif encore, lorsque l'identifiant de trame évolue de manière prédéfinie pour des trames émises successivement sur un même réseau élémentaire, le module de vérification 44 vérifie en outre, pour au moins une nouvelle trame reçue, et de préférence pour chaque nouvelle trame reçue, que l'identifiant de trame de la nouvelle trame reçue est cohérent au regard de l'identifiant de trame de la précédente trame reçue, en tenant compte de l'écart temporel entre la date de réception de la précédente trame et la date de réception de la nouvelle trame.

En cas de détection d'une incohérence d'identifiant de trame, en particulier de numéro de séquence SN selon l'exemple de la partie 7 de la norme ARINC 664, le module de vérification 44 ignore la nouvelle trame reçue pour laquelle cette incohérence a été détectée.

Ainsi, le dispositif de réception 20 selon l'invention permet de détecter que les informations émises sur les réseaux élémentaires du réseau de communication redondé 16 sont cohérentes entre elles en comparant le code contrôle de trame, tel que le FCS, d'une même trame émise sur les différents réseaux élémentaires et en vérifiant qu'aucune information supplémentaire n'a été ajoutée sur un des réseaux élémentaires par une surveillance de l'évolution du marqueur de la trame, c'est-à-dire du code contrôle de trame.

Dans le contexte aéronautique, lorsque le réseau de communication redondant 16 est conforme à la partie 7 de la norme ARINC 664, cela consiste à calculer pour chaque trame acceptée par l'algorithme du « first win », le code contrôle de trame, tel que le CRC, de la trame qui devra être reçue sur le ou les autres réseaux élémentaires.

A la réception d'une trame avec le même identifiant de trame sur le ou les autres réseaux élémentaires, la comparaison des codes contrôle de trame permet alors de détecter une éventuelle compromission du réseau élémentaire, tel que le lien virtuel.

En complément facultatif, la cohérence des identifiants reçus sur le ou les autres réseaux élémentaires durant le biais maximal (*skew max*) est vérifiée.

Ceci permet alors de vérifier que les trames reçues sur les réseaux élémentaires sont cohérentes entre elles. Le dispositif de réception 20 permet alors de détecter différents types d'attaques malveillantes, telles que l'ajout d'une trame supplémentaire sur un seul réseau élémentaire, et permet de manière générale de détecter une cyberattaque sur l'un des réseaux élémentaires du réseau de communication redondé 16.

L'homme du métier comprendra en outre que l'invention permet de vérifier cette cohérence entre les réseaux élémentaires du réseau de communication redondé 16 sans avoir à stocker toutes les trames de données reçues, puisqu'il suffit de calculer le code contrôle de trame pour chaque trame reçue.

On conçoit ainsi que le dispositif électronique de réception 20 et le procédé de réception selon l'invention permettent de détecter plus efficacement une cyberattaque.

## Revendications

1. Dispositif électronique de réception (20) de données via un réseau de communication redondé (16) comportant au moins deux réseaux élémentaires indépendants, le dispositif électronique (20) étant configuré pour être connecté à chaque réseau élémentaire et comprenant :
- un module de réception (42) configuré pour recevoir via le réseau de communication redondé (16) au moins une trame de données, chaque trame comportant un identifiant de trame et un champ de données, chaque trame étant transmise sur chacun des réseaux élémentaires, l'identifiant de trame évoluant de manière prédéfinie pour des trames émises successivement sur un même réseau élémentaire,
**caractérisé en ce qu'**il comprend un module de vérification (44) configuré, pour au moins un identifiant de trame reçu, pour calculer un code de contrôle de trame pour chacun des réseaux élémentaires, puis pour comparer les codes de contrôle de trame entre les réseaux élémentaires, chaque code de contrôle de trame dépendant du champ de données de la trame reçue via le réseau élémentaire respectif et, pour au moins une nouvelle trame reçue, pour vérifier que l'identifiant de trame de la nouvelle trame reçue est cohérent avec l'identifiant de trame de la précédente trame reçue, compte tenu de l'écart temporel entre la date de réception de la précédente trame et la date de réception de la nouvelle trame.

2. Dispositif (20) selon la revendication 1, dans lequel le module de vérification (44) est, pour chaque identifiant de trame reçu, configuré pour calculer le code de contrôle de trame pour chacun des réseaux élémentaires, puis pour comparer les codes de contrôle de trame entre les réseaux élémentaires.

3. Dispositif (20) selon la revendication 1 ou 2, dans lequel, lorsque le réseau de communication redondé (16) comporte seulement deux réseaux élémentaires, le module de vérification (44) est, pour l'identifiant de trame respectif, configuré pour comparer le code de contrôle de trame calculé pour un réseau élémentaire avec le code de contrôle de trame calculé pour l'autre réseau élémentaire et pour générer une alerte en cas d'incohérence entre les deux codes de contrôle de trame calculés.

4. Dispositif (20) selon la revendication 1 ou 2, dans lequel, lorsque le réseau de communication redondé (16) comporte au moins trois réseaux élémentaires, le module de vérification (44) est, pour l'identifiant de trame respectif, configuré pour comparer les codes de contrôle de trame entre les réseaux élémentaires via un algorithme de vote majoritaire et pour générer une alerte en cas d'incohérence entre les codes de contrôle de trame calculés.

5. Dispositif (20) selon l'une quelconque des revendications précédentes, dans lequel le module de vérification (44) est en outre, pour au moins un identifiant de trame reçu, de préférence pour chaque identifiant de trame reçu, configuré pour déterminer une date de réception de la trame associée audit identifiant pour chacun des réseaux élémentaires, pour comparer les dates de réception entre les réseaux élémentaires et vérifier que l'écart entre deux dates de réception est inférieur ou égal à un écart maximal prédéfini.

6. Dispositif (20) selon l'une quelconque des revendications précédentes, dans lequel le module de vérification (44) est, pour chaque nouvelle trame reçue, configuré pour vérifier que l'identifiant de trame de la nouvelle trame reçue est cohérent avec l'identifiant de trame de la précédente trame reçue, compte tenu de l'écart temporel entre la date de réception de la précédente trame et la date de réception de la nouvelle trame.

7. Dispositif (20) selon l'une quelconque des revendications précédentes, dans lequel le dispositif (20) est un dispositif avionique conforme à la partie 7 de la norme ARINC 664, et le module de réception (42) est configuré pour recevoir chaque trame selon un protocole conforme à la partie 7 de la norme ARINC 664.

8. Système électronique (12) de communication de données comprenant un dispositif électronique d'émission (18) et un dispositif électronique de réception (20) reliés entre eux par un réseau de communication redondé (16), le réseau de communication (16) comportant au moins deux réseaux élémentaires indépendants,
le dispositif électronique d'émission (18) étant configuré pour émettre, à destination du dispositif électronique de réception (20), au moins une trame de données sur chacun des réseaux élémentaires, chaque trame émise comportant un identifiant de trame et un champ de données,
**caractérisé en ce que** le dispositif électronique de réception (20) est selon l'une quelconque des revendications précédentes.

9. Procédé de réception de données via un réseau de communication redondé (16) comportant au moins deux réseaux élémentaires indépendants, le procédé étant mis en œuvre par un dispositif électronique de réception (20) connecté à chaque réseau élémentaire et comprenant l'étape suivante :
- la réception (110), via le réseau de communication redondé (16), d'au moins une trame de données, chaque trame comportant un identifiant de trame et un champ de données, chaque trame étant transmise sur chacun des réseaux élémentaires, l'identifiant de trame évoluant de manière prédéfinie pour des trames émises successivement sur un même réseau élémentaire,
**caractérisé en ce qu'**il comprend en outre une étape (120) de vérification pour au moins un identifiant de trame reçu, de préférence pour chaque identifiant de trame reçu,
l'étape de vérification (120) comportant le calcul (130) d'un code de contrôle de trame pour chacun des réseaux élémentaires, puis la comparaison (140) des codes de contrôle de trame entre les réseaux élémentaires, chaque code de contrôle de trame dépendant du champ de données de la trame reçue via le réseau élémentaire respectif et, pour au moins une nouvelle trame reçue, la vérification que l'identifiant de trame de la nouvelle trame reçue est cohérent avec l'identifiant de trame de la précédente trame reçue, compte tenu de l'écart temporel entre la date de réception de la précédente trame et la date de réception de la nouvelle trame.

10. Programme d'ordinateur comportant des instructions logicielles qui, lorsqu'elles sont exécutées par un ordinateur, mettent en œuvre un procédé selon la revendication précédente.

## Patentansprüche

1. Elektronische Vorrichtung zum Empfangen (20) von Daten über ein redundantes Kommunikationsnetz (16), welches mindestens zwei unabhängige Einzelnetze aufweist, wobei die elektronische Vorrichtung (20) dazu eingerichtet ist, mit jedem Einzelnetz verbunden zu sein, und aufweist:
- ein Empfangsmodul (42), welches dazu eingerichtet ist, über das Netz redundante Kommunikationsnetz (16) mindestens einen Rahmen an Daten zu empfangen, wobei jeder Rahmen einen Rahmenidentifikator und ein Datenfeld aufweist, wobei jeder Rahmen auf jedem der Einzelnetze übertragen wird, wobei der Rahmenidentifikator sich für nacheinander auf dem gleichen Einzelnetz gesendete Rahmen auf vordefinierte Weise verändert,
**gekennzeichnet dadurch, dass** sie ein Verifizierungsmodul (44) aufweist, welches dazu eingerichtet ist, für mindestens einen empfangenen Rahmenidentifikator einen Rahmenprüfcode für jedes der Einzelnetze zu berechnen und dann die Rahmenprüfcodes zwischen den Einzelnetzen zu vergleichen, wobei jeder Rahmenprüfcode vom Datenfeld des über das jeweilige Einzelnetz empfangenen Rahmens abhängt, und für mindestens einen neuen empfangenen Rahmen zu prüfen, ob der Rahmenidentifikator des neuen empfangenen Rahmens im Einklang mit dem Rahmenidentifikator des vorhergehenden empfangenen Rahmens ist, unter Berücksichtigung des zeitlichen Abstands zwischen dem Empfangszeitpunkt des vorhergehenden Rahmens und dem Empfangszeitpunkt des neuen Rahmens.

2. Vorrichtung (20) gemäß dem Anspruch 1, wobei das Verifizierungsmodul (44) für jeden empfangenen Rahmenidentifikator dazu eingerichtet ist, den Rahmenprüfcode für jedes der Einzelnetze zu berechnen und dann die Rahmenprüfcodes zwischen den Einzelnetzen zu vergleichen.

3. Vorrichtung (20) gemäß dem Anspruch 1 oder 2, wobei, wenn das redundante Kommunikationsnetz (16) ausschließlich zwei Einzelnetze aufweist, das Verifizierungsmodul (44) für den jeweiligen Rahmenidentifikator dazu eingerichtet ist, den für ein Einzelnetz berechneten Rahmenprüfcode mit dem für das andere Einzelnetz berechneten Rahmenprüfcode zu vergleichen und eine Warnung im Falle einer Inkonsistenz zwischen den zwei berechneten Rahmenprüfcodes zu erzeugen.

4. Vorrichtung (20) gemäß dem Anspruch 1 oder 2, wobei, wenn das Kommunikationsnetz (16) mindestens drei Einzelnetze aufweist, das Verifizierungsmodul (44) für den jeweiligen Rahmenidentifikator dazu eingerichtet ist, die Rahmenprüfcodes zwischen den Einzelnetzen mittels eines Mehrheitsentscheidungsalgorithmus zu vergleichen und eine Warnung im Falle einer Inkonsistenz zwischen den berechneten Rahmenprüfcodes zu erzeugen.

5. Vorrichtung (20) gemäß irgendeinem der vorhergehenden Ansprüche, wobei das Verifizierungsmodul (44) ferner für mindestens einen empfangenen Rahmenidentifikator, vorzugsweise für jeden empfangenen Rahmenidentifikator, dazu eingerichtet ist, einen Empfangszeitpunkt des zu dem Identifikator gehörenden Rahmens für jedes der Einzelnetze zu ermitteln, die Empfangszeitpunkte zwischen den Einzelnetzen zu vergleichen und zu prüfen, ob der Abstand zwischen zwei Empfangszeitpunkten kleiner oder gleich einem vordefinierten Maximalabstand ist.

6. Vorrichtung (20) gemäß irgendeinem der vorhergehenden Ansprüche, wobei das Verifizierungsmodul (44) für jeden neuen empfangenen Rahmen dazu eingerichtet ist, zu prüfen, ob der Rahmenidentifikator des neuen empfangenen Rahmens im Einklang mit dem Rahmenidentifikator des vorhergehenden empfangenen Rahmens ist, unter Berücksichtigung des zeitlichen Abstands zwischen dem Empfangszeitpunkt des vorhergehenden Rahmens und dem Empfangszeitpunkt des neuen Rahmens.

7. Vorrichtung (20) gemäß irgendeinem der vorhergehenden Ansprüche, wobei die Vorrichtung (20) eine Avionik-Vorrichtung, welche mit dem Teil 7 der Norm ARINC 664 konform ist, ist und das Empfangsmodul (42) dazu eingerichtet ist, jeden Rahmen gemäß einem Protokoll, welches mit dem Teil 7 der Norm ARINC 664 konform ist, zu empfangen.

8. Elektronisches System (12) zur Datenkommunikation, welches eine elektronische Vorrichtung zum Senden (18) und eine elektronische Vorrichtung zum Empfangen (20), welche miteinander durch ein redundantes Kommunikationsnetz (16) verbunden sind, aufweist, wobei das Kommunikationsnetz (16) mindestens zwei unabhängige Einzelnetze aufweist,
wobei die elektronische Vorrichtung zum Senden (18) dazu eingerichtet ist, mindestens einen Rahmen an Daten auf jedem der Einzelnetze an die elektronische Vorrichtung zum Empfangen (20) zu senden, wobei jeder gesendete Rahmen einen Rahmenidentifikator und ein Datenfeld aufweist,
**gekennzeichnet dadurch, dass** die elektronische Vorrichtung zum Empfangen (20) gemäß irgendeinem der vorhergehenden Ansprüche ist.

9. Verfahren zum Empfangen von Daten über ein redundantes Kommunikationsnetz (16), welches mindestens zwei unabhängige Einzelnetze aufweist, wobei das Verfahren durch eine elektronische Vorrichtung zum Empfangen (20), welche mit jedem Einzelnetz verbunden ist, durchgeführt wird und die folgenden Schritte aufweist:
- das Empfangen (110), über das redundante Kommunikationsnetz (16), von mindesten seinem Rahmen an Daten, wobei jeder Rahmen einen Rahmenidentifikator und ein Datenfeld aufweist, wobei jeder Rahmen auf jedem der Einzelnetze übertragen wird, wobei der Rahmenidentifikator sich für nacheinander auf dem gleichen Einzelnetz gesendete Rahmen auf vordefinierte Weise verändert, **gekennzeichnet dadurch, dass** es ferner einen Schritt (120) des Verifizierens für mindestens einen empfangenen Rahmenidentifikator, vorzugsweise für jeden empfangenen Rahmenidentifikator, aufweist,
wobei der Schritt des Verifizierens (120) aufweist das Berechnen (130) eines Rahmenprüfcodes für jedes der Einzelnetze und dann das Vergleichen (140) der Rahmenprüfcodes zwischen den Einzelnetzen, wobei jeder Rahmenprüfcode vom Datenfeld des über das jeweilige Einzelnetz empfangenen Rahmens abhängt, und, für jeden neuen empfangenen Rahmen, das Prüfen, ob der Rahmenidentifikator des neuen empfangenen Rahmens im Einklang mit dem Rahmenidentifikator des vorhergehenden empfangenen Rahmens ist, unter Berücksichtigung des zeitlichen Abstands zwischen dem Empfangszeitpunkt des vorhergehenden Rahmens und dem Empfangszeitpunkt des neuen Rahmens.

10. Computerprogramm, welches Softwareanweisungen aufweist, welche bei deren Ausführung durch einen Computer das Verfahren gemäß dem vorhergehenden Anspruch durchführen.

## Claims

1. An electronic device (20) for receiving data via a redundant communication network (16) comprising at least two independent elementary networks, the electronic device (20) being configured to be connected to each elementary network and including:
- a receiving module (42) configured to receive, via the redundant communication network (16), at least one data frame, each frame comprising a frame identifier and a data field, each frame being sent over each of the elementary networks, the frame identifier evolving in a predefined manner for frames sent successively over a same elementary network,
**characterized in that** it includes a verification module (44) configured, for at least one received frame identifier, to calculate a frame check code for each of the elementary networks, then to compare frame check codes between the elementary networks, each frame check code depending on the data field of the frame received via the respective elementary network and, for at least one received frame, to verify that the frame identifier of the new received frame is consistent with the frame identifier of the previous received frame, in light of the temporal deviation between the date of receipt of the previous frame and the date of receipt of the new frame.

2. The device (20) according to claim 1, wherein the verification module (44) is, for each received frame identifier, configured to calculate the frame check code for each of the elementary networks, then to compare the frame check codes between the elementary networks.

3. The device (20) according to claim 1 or 2, wherein, when the redundant communication network (16) comprises only two elementary networks, the verification module (44) is, for the respective frame identifier, configured to compare the frame check code calculated for one elementary network with the frame check code calculated for the other elementary network and to generate an alert in case of inconsistency between the two calculated frame check codes.

4. The device (20) according to claim 1 or 2, wherein, when the redundant communication network (16) comprises at least three elementary networks, the verification module (44) is, for the respective frame identifier, configured to compare the frame check codes between the elementary networks via a majority vote algorithm and to generate an alert in case of inconsistency between the calculated frame check codes.

5. The device (20) according to any one of the preceding claims, wherein the verification module (44) is further, for at least one received frame identifier, preferably for each received frame identifier, configured to determine a date of receipt of the frame associated with said identifier for each of the elementary networks, to compare the dates of receipt between the elementary networks and verify that the deviation between two dates of receipt is less than or equal to a predefined maximum deviation.

6. The device (20) according to any one of the preceding claims, wherein the verification module (44) is, for each new received frame, configured to verify that the frame identifier of the new received frame is consistent with the frame identifier of the previous received frame, in light of the temporal deviation between the date of receipt of the previous frame and the date of receipt of the new frame.

7. The device (20) according to any one of the preceding claims, wherein the device (20) is an avionics device according to part 7 of standard ARINC 664, and the receiving module (42) is configured to receive each frame according to a protocol according to part 7 of standard ARINC 664.

8. An electronic data communication system (12) including an electronic transmission device (18) and an electronic receiving device (20), connected to one another by a redundant communication network (16), the communication network (16) comprising at least two independent elementary networks,
the electronic transmission device (18) being configured to transmit, to the electronic receiving device (20), at least one data frame on each of the elementary networks, each transmitted frame comprising a frame identifier and a data field,
**characterized in that** the electronic receiving device (20) is according to any one of the preceding claims.

9. A method for receiving data via a redundant communication network (16) comprising at least two independent elementary networks, the method being carried out by an electronic receiving device (20) connected to each elementary network and including the following step:
- receiving (110), via the redundant communication network (16), at least one data frame, each frame comprising a frame identifier and a data field, each frame being sent over each of the elementary networks, the frame identifier evolving in a predefined manner for frames sent successively over a same elementary network,
**characterized in that** it further includes a verification step (120) for verifying at least one received frame identifier, preferably for each received frame identifier,
the verification step (120) comprising calculating (130) a frame check code for each of the elementary networks, then comparing (140) frame check codes between the elementary networks, each frame check code depending on the data field of the frame received via the respective elementary network and, for at least one received frame, to verify that the frame identifier of the new received frame is consistent with the frame identifier of the previous received frame, in light of the temporal deviation between the date of receipt of the previous frame and the date of receipt of the new frame.

10. A computer program comprising software instructions which, when executed by a computer, carry out a method according to the preceding claim.
